# EUROPEAN PATENT SPECIFICATION

(11) **EP 0 678 671 B1**
(45) Date of publication and mention of the grant of the patent: **22.07.1998**
(21) Application number: 95302716.6
(22) Date of filing: 24.04.1995
(51) Int. Cl.: F03G 7/06

(54) **Heat harness for converting heat energy into mechanical energy**
Wärmeschlaufe zur Abgabe von mechanischer Energie
Boucle thermique pour produire de l'énergie mécanique

(30) Priority: 23.04.1994 GB 9408081
(43) Date of publication of application: 25.10.1995
(73) Proprietor: Newton, Nigel Joseph, Weston-Super-Mare, Avon BS22 0LJ (GB)
(72) Inventor: Newton, Nigel Joseph, Weston-Super-Mare, Avon BS22 0LJ (GB)

(56) References cited:
- US-A- 4 030 298
- US-A- 4 037 411
- US-A- 4 281 513
- US-A- 4 938 026

## Description

This invention relates in general to power plants using expansion and contraction characteristics of a solid or solids in generation of power.

Environmental and solar powered engines using bimetallic materials, memory effects, gravitational effects or expansion-contraction of members mounted between rotatable wheels are described in the following patents:

| | |
|---|---|
| GB 1581475 Hochstein | EP 0008443 A2 Bernd Hahn |
| GB 1580893 Cherwell | US 4030298 Sandoval |
| GB 1549330 Institutul | US 4006594 Horton |

Environmental engines are relatively non-polluting and are able to utilise inexpensive or cost-free energy sources. or to enhance the efficiency of fuel using engines. The present invention enables the harnessing of energy sources without the necessity of using a working fluid or fluid seals. or of bimetallic materials or memory effect alloys and more particularly harnesses the forces of expansion and contraction occurring preferably in the line of the path of circulation of a loop of circulating material.

According to the present invention an expansile-contractile element in the form of a loop for producing force is movably mounted across a temperature differential on a frame. In other examples the loop may comprise one or more sections segments wheels rods cylinders wires chain links cables balls tubes or other solid or hollow or composite materials or groups of materials or series of members or jointed members in the form of a loop or in other examples of a broken loop or line or piece. The said element is mounted on the frame so that the element is able to circulate. As a result of temperature effects a part of the element expands in line with the path of circulation of that part of the loop and a part of the element contracts in line with the path of circulation of that part of the loop. The direction of movement may be determined by one or more non-return devices preferably of the stepless or roller clutch type. A drive mechanism drives the element in the direction of circulation and a drive mechanism is driven by the element when the element moves in the direction of circulation. The element may be constrained for example by rollers to constrain the movements resulting from expansion-contraction forces. Other types of non return device may be used.

It is an object of the present invention to provide an apparatus for harnessing heat transfer across a temperature differential or solar power or other radiation or energy source which may directly or indirectly lead to or be made to produce expansion-contraction forces so that work output may be obtained using the apparatus.

It is also an object of the present invention to provide an apparatus that may enhance or contribute additional work to the operation of another engine or power plant or other apparatus.

The invention is suitable for application in a great variety of situations and additional objects and advantages will become apparent.

Examples of the invention are now described with accompanying drawings.

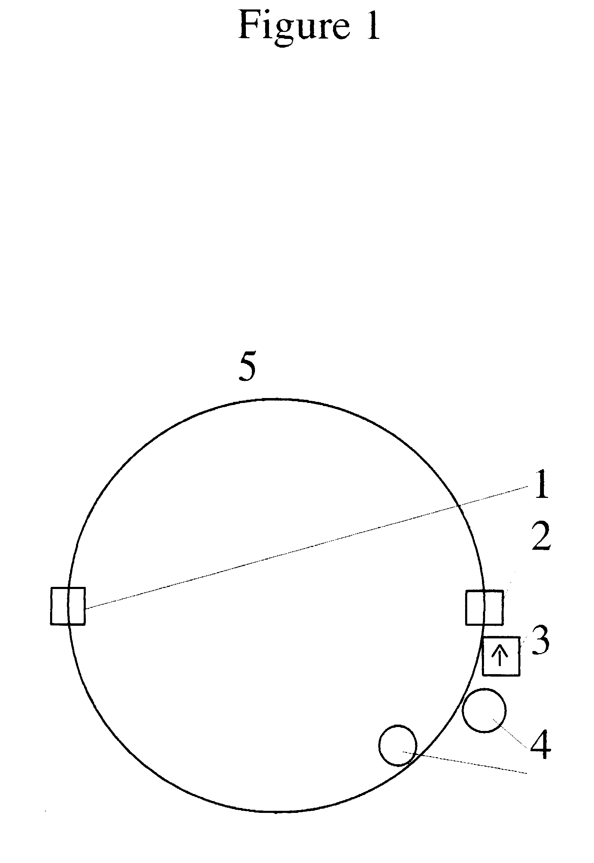

Fig. 1 shows schematically a solar powered preferred embodiment wherein a loop of expansile-contractile material in this case steel 5 is constrained by a number of rollers 4 only two of which are shown, and to which are applied two friction drive mechanisms 1 and 2 and a non return device 3 which in this example is a roller clutch. A ratchet or other form of non-return device may be used in other embodiments. The drive mechanisms are linked in this example by a connecting drive shaft and gears not shown such that an amount of counterclockwise movement of the loop at drive 1 causes an equivalent amount of counterclockwise movement of the loop at drive 2. The rollers, drive mechanisms, shaft and non return device are mounted on a frame not shown. Toothed gearwheels or other drive mechanisms may be used similarly to the friction drives in this example, other materials than steel may be used similarly to the loop of steel and other linkages may be used similarly to the connecting rod and gears in this example.

A black surface is preferable for the absorption of solar energy and means such as heat collectors or heat exchangers or other means of applying heat may also be used. This example is positioned such that the upper part of the loop is in the sunshine which fonns a hot sink and the lower part in the shade which forms a cold sink. The part of the loop in the sunshine warms and expands. The expansion is restricted in a radial direction by the rollers 4 and the non return device 3 prevents the loop from circulating in a clockwise direction. The expansion therefore causes a small amount of the loop to move in the counterclockwise direction, acting upon drive 1 and moving away from the sunnier warmer environment toward the shadier cooler environment. The drive 1 is linked to the other drive 2 such that drive 2 drives another part of the loop from the shadier cooler environment to the sunnier warmer environment. A formerly warm part of the loop now cools in the cooler environment and a formerly cool part of the loop now warms in the warmer environment and corresponding forces occur which drive the process. A pulley wheel power take off not shown is attached to drive 1. Other means of power take off may be similarly used and attached to drive 1 or elsewhere to suit the particular application.

In other examples one or more sections segments wheels rods cylinders wires chain links cables balls tubes or other solid or hollow or composite materials or groups of materials may be caused to circulate similarly to the loop described above. Also the hot and cold environments may move relative to the frame in other examples.

An engine applied to drive 2 will result in a work output at drive 1 which has been enhanced by the apparatus. Similarly where a number of these apparatuses are operated in series a cumulative enhancement will ensue. Other applications will be apparent. The present embodiments are not to be considered restrictive in the scope of the invention which is indicated by the appended claims and all changes which come within the meaning and range of equivalency of the claims are to be embraced by them.

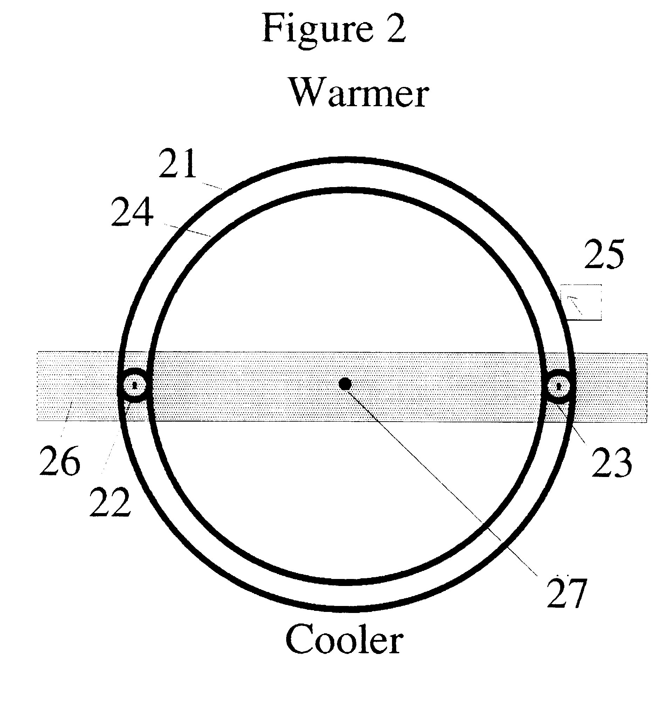

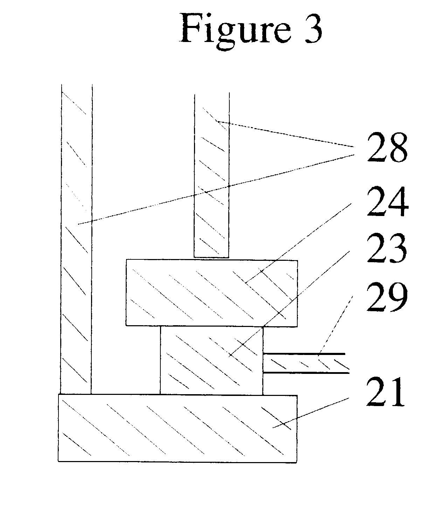

A second preferred embodiment is now described. Referring to Figures 2 and 3 an expansile-contractile element in the form of a gear-wheel 21 is mounted between differing temperature environments which may be separated by an insulating barrier 26. The warmer environment causes expansion forces in the part of the wheel in the warmer environment and the cooler environment causes contraction forces in the part of the wheel in the cooler environment.

The forces in this example cause movement preferably around the circumference, (rather than radially, changing the diameter.) because the wheel spokes and the hub not shown are of very low expansivity and very low elasticity material. The spokes may be constructed of overlapping metals of differing expansivity such that the counter expansion of one compensates for the expansion of the whole spoke. The junction of the spokes to the hub and to the gear are movable such that segments of the gear are able to move around at differing rates. Other means or materials may be used to constrain the effects of the expansion-contraction forces in other examples. The circumference may also be restrained against change in diameter by being constrained by rollers held in concrete or other means.

In this example a non-return device a ratchet 25 is shown near the insulation barrier 26 which restricts movement of that part of the wheel to rotation counterclockwise. This ensures that the expansion of the wheel around its circumference is translated into rotation in one direction and it determines the direction of that rotation of the wheel in this case counterclockwise. Obviously other examples may circulate clockwise.

Again referring to Figure 2 the warmer environment causes expansion forces in the warmer part of the wheel 21 which drive a pinion 22 as a part of the wheel moves from the warmer to the cooler environment. As the pinion 22 is linked to another pinion 23 by gearwheel 24 another part of the wheel 21 is driven by pinion 23 from the cooler to the warmer environment. A formerly warm part of the wheel now cools in the cooler environment and a formerly cool part of the wheel now warms in the warmer environment and corresponding forces occur which drive the process. The axes of the wheels 27 and of the pinions and the ratchet are fixed to earth. The pinions are linked such that expansion/contraction forces are maintained and the process continues. In this preferred example the link between the pinions is another similar gear wheel 24 which is itself subject to temperature change and expansion-contraction forces and contributes to the motive force. The link is mounted on the frame not shown such that it is driven but not disengaged by the effects of temperature. A power output not shown is a pulley wheel attached to the pinion shaft 29 detailed in Figure 3. A power take-off in other examples may obviously be taken from wheel or pinion or elsewhere as suits the application.

Pinions and or gears may or may not be used in other examples.

Figure 3 shows schematically the arrangement in this example of the outer wheel 21 which has internal gear teeth, the inner wheel 24 which has external gear teeth, a pinion 23 with shaft 29 and wheel spokes 28. Other arrangements may be used in other examples.

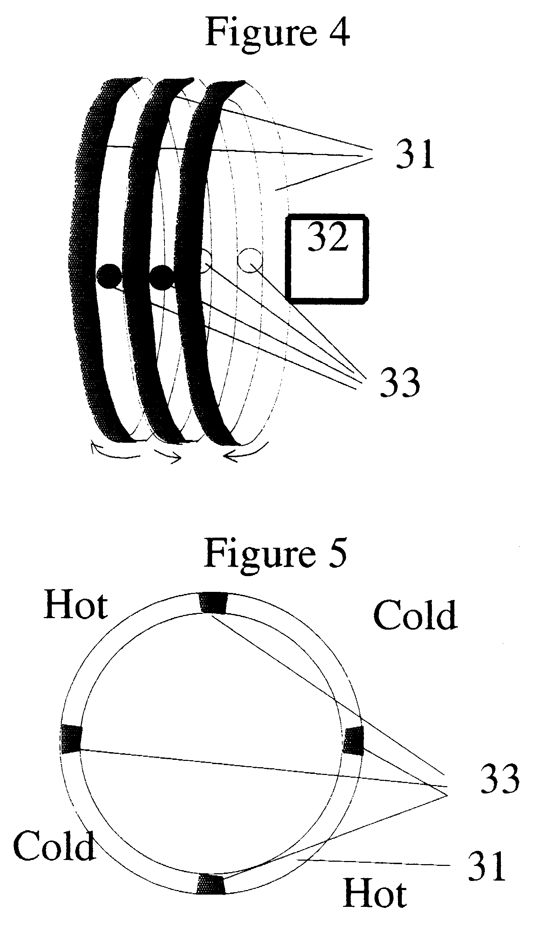

A third preferred embodiment is now described. Referring to Figure 4 a number in this case three expansile-contractile elements in the form of gear wheels having gear teeth on the sides 31 are mounted between differing temperature environments which may be separated by an insulating barrier. The wheel spokes and the hub not shown are of low expansivity and low elasticity. In this case the spokes are of high tensile carbon fibre construction. The junctions of the spokes to the hub and to the gear are flexible, in this case comprising shackles and U bolts, such that segments of the gear wheels are able to move around at differing rates.

Other means or materials may be used in other examples to constrain the effects of the expansion-contraction forces.

In this example a non return device limits the rotation of the wheel to the direction indicated by the arrow. Drive mechanisms in the form of two pinions are mounted between adjacent gear, spaced around the wheel, such that rotation of one gear wheel causes contra-rotation of the next. The axes of pinions and gear wheels are fixed to earth by the frame not shown.

Hot and cold sinks are provided by means of hot and cold water pipes not shown at the top and bottom of the wheels respectively. A power take off not shown is by means of a pulley wheel attached to a pinion. Other methods of power take off from pinion or wheel or otherwise may be used in other examples.

A further preferred embodiment is similar to the latter example and has more than one hot sink and more than one cold sink and four pinions between each gear wheel arranged as schematically shown in Figure 5 where four pinions 33 are mounted at one side of the gear wheel 31. It can be seen that the number of drive mechanisms and of temperature differentials is not limited to what is described in these example.

## Claims

1. Apparatus for converting heat energy into mechanical energy which comprises:
a harnessing unit, said unit including
a frame;
an expansile-contractile element in the form of a loop for producing force which is movably mounted on said frame and is able to circulate on said frame, a part of which element expands preferably in line with the path of circulation of that part of the loop and a part of which element contracts preferably in line with the path of circulation of that part of the loop
a drive mechanism which is driven directly or indirectly by movement in the direction of circulation of the circulating element and a drive mechanism which drives the element in the direction of circulation of the circulating element:
means for mounting the element on the frame so that movement of the element resulting from expansion-contraction forces occurs in the line of the path of of circulation; and
means for producing a temperature differential across the element.

2. Apparatus as claimed in Claim 1, further comprising means for power take-off.

3. Apparatus as claimed in Claims 1 or 2 in which the expansile-contractile element comprises one or more sections, segments, wheels, rods, cylinders, wires, chain links, cables, balls, tubes or other solid or hollow or composite materials or group of materials or series of members or jointed members.

4. Apparatus as claimed in Claims 1 or 2 or 3 where the element is in the form of a coil or a broken loop or line or piece.

5. Apparatus as claimed in Claim 1 or 2 or 3 or 4 wherein only the expansile phase or only the contractile phase is utilised in that apparatus.

6. Apparatus as claimed in Claim 1 or 2 or 3 or 4 or 5 wherein one or more non return devices are used.

7. Apparatus as claimed in any above Claim wherein one or more drive mechanisms is or are independently powered.

8. Apparatus as claimed in any Claim above further comprising one or more heat converters.

9. Apparatus as claimed in any Claim above further comprising more than one temperature differential or one or more temperature differentials which may alter position.

## Patentansprüche

1. Apparat zur Umwandlung von Wärmeenergie in mechanische Energie bestehend aus: einer Haltevorrichtung, welche folgendes enthält:
einen Rahmen
ein Element welches sich ausdehnen und zusammenziehen kann, in Form einer Schlinge zur Krafterzeugung, welche beweglich auf dem vorgenannten Rahmen befestigt und in der Lage ist, sich auf dem Rahmen zu drehen. Ein Teil dieses Elements dehnt sich vorzugsweise in Richtung der Drehbewegung dieses Teils der Schlinge aus und ein Teil des Elements zieht. sich vorzugsweise in Richtung der Drehbewegung dieses Teils der Schlinge zusammen.
einen Abtriebsmechanismus, welcher direkt oder indirekt von der Bewegung in der Drehrichtung des beweglichen Elements bewegt wird und einen Antriebsmechanismus, welcher das Element in die Richtung der Drehbewegung bewegt
Befestigung des Elements auf dem Rahmen, so dass die Bewegung des Elements, hervorgerufen durch die Kraefte des Ausdehnens-Zusammenzichens, in Richtung der Drehbewegung erfolgt, sowie
Vorrichtung zur Erzeugung von Temperaturunterschieden innerhalb des Elements

2. Apparat wie unter 1 mit einer Anlage zur Stromabnahme

3. Apparat wie unter 1 oder 2, in welchem das sich ausdehnende-zusammenziehende Element aus einem oder mehreren Segmenten, Rädern, Stangen, Zylindern, Drähten, Kettengliedern, Kabeln, Kugeln, Röhren oder anderen festen oder hohlen oder zusammengesetzten Materialien oder Materialgruppen oder einer Serie von Einzelteilen oder verbundenen Teilen besteht

4. Apparat wie unter 1 oder 2 oder 3, bei dem das Element die Form einer Spirale oder unterbrochenen Schlinge oder eines unterbrochenen Kabels oder anderen Teils hat

5. Apparat wie unter 1 oder 2 oder 3 oder 4, in dem ausschließlich die Ausdehnungsphase oder ausschließlich die Phase des Zusammenziehens genutzt wird

6. Apparat wie unter 1 oder 2 oder 3 oder 4 oder 5, in dem ein- oder mehrere Einwegvorrichtungen vewendet werden

7. Apparat wie in jedem der vorgenannten Punkte beschrieben, in dem ein oder mehrere Antriebs/ Abtriebsmechanismen unabhaengig voneinander angetrieben wird/werden

8. Apparat wie in jedem der vorgenannten Punkte beschrieben, der außerdem ein oder mehrere Wärmeumwandler enthält.

9. Apparat wie in jedem der vorgenannten Punkte beschrieben, der außerdem mehr als ein Temperaturdifferential enthält oder ein oder mehrere Temperaturdifferentiale, deren Lage sich verschieben kann.

## Revendications

1. Un appareil dont l'utilisation est de convertir l'énergie thermale en énergie mécanique constitué :
- d'une unité d'exploitation composée des éléments suivants :
- un cadre.
- un élément d'expansion-contraction sous forme d'une boucle montée de façon amovible sur le cadre en question et qui peut y circuler. Une partie de cet élément se dilate de préférence dans le sens du. mouvement de cette partie de la boucle ; une autre partie de cet élément se contracte de préférence dans le sens du mouvement de cette partie de la boucle.
- un mécanisme moteur actionné directement ou indirectement par le mouvement dans le sens de la circulation de l'élément ainsi qu'un mécanisme moteur qui propulse l'élément dans le sens du mouvement de l'élément qui circule.
- un dispositif de montage destiné à orienter l'élément sur le cadre afin que le mouvement de l'élément qui résulte des forces de dilatation et de contraction soit orienté dans le sens du mouvement de l'élément qui circule.
- d'un moyen de produire un différentiel de température dans l'élément.

2. L'équipement comme décrit dans le paragraphe 1, ainsi qu'un dispositif de prise de courant.

3. L'équipement comme décrit dans les paragraphes 1 ou 2 dont l'élément de dilatation-contraction est composé d'un ou de plusieurs sections, segments, roues, tringles, fils, chaînes, cables, balles, tubes ou d'autres matériaux, qu'il s'agisse de matériaux solides, creux ou composites, ou d'un groupe de ces matériaux, ou d'une série de membres, ou de membres articulés.

4. L'équipement comme décrit dans les paragraphes 1, 2 ou 3 où l'élément est sous forme d'un rouleau, ou d'une boucle interrompue, ou d'une ligne, ou d'une pièce.

5. L'équipement comme décrit dans les paragraphes 1, 2, 3 ou 4 où l'appareil se sert uniquement soit de la phase dilatation, soit de la phase contraction.

6. L'équipement comme décrit dans les paragraphes 1, 2, 3, 4 ou 5 où l'appareil contient un ou plusieurs dispositifs de non-retour.

7. L'équipement comme décrit dans un des paragraphes précédents où un ou plusieurs mécanismes moteurs sont alimentés indépendamment.

8. L'équipement comme décrit dans un des paragraphes précédents contenant par ailleurs un ou plusieurs convertisseurs de chaleur.

9. L'équipement comme décrit dans un des paragraphes précédents contenant par ailleurs un ou plusieurs différentiels de température capables de changer de position.
